(19) **Europäisches Patentamt / European Patent Office / Office européen des brevets**

(11) **EP 1 292 833 B1**

(12) **FASCICULE DE BREVET EUROPEEN**

(45) Date de publication et mention
de la délivrance du brevet:
**30.12.2009 Bulletin 2009/53**

(51) Int Cl.:
*G01P 21/02* (2006.01)     *G01C 22/00* (2006.01)
*G01D 11/30* (2006.01)

(21) Numéro de dépôt: **00927326.9**

(22) Date de dépôt: **11.05.2000**

(86) Numéro de dépôt international:
**PCT/FR2000/001262**

(87) Numéro de publication internationale:
**WO 2001/086308 (15.11.2001 Gazette 2001/46)**

(54) **DISPOSITIF DE MESURE ET DE CONTROLE DES COMPTEURS DE VEHICULES**

MESS- UND KONTROLLVORRICHTUNG FÜR ZÄHLER AN FAHRZEUGEN

DEVICE FOR MEASURING AND CONTROLLING VEHICLE-MOUNTED METERS

(84) Etats contractants désignés:
**AT BE CH CY DE DK ES FI FR GB GR IE IT LI LU MC NL PT SE**

(43) Date de publication de la demande:
**19.03.2003 Bulletin 2003/12**

(73) Titulaires:
• **Purguette, Edmond Jean-Paul**
  **13790 Châteauneuf Le Rouge (FR)**
• **Durand, Claude**
  **13006 Marseille (FR)**
• **La Rocca, Jean Pierre**
  **13008 Marseille (FR)**
• **L'Helgouarc'h, Alain**
  **83390 Puget Ville (FR)**

(72) Inventeurs:
• **Purguette, Edmond Jean-Paul**
  **13790 Châteauneuf Le Rouge (FR)**
• **Durand, Claude**
  **13006 Marseille (FR)**
• **La Rocca, Jean Pierre**
  **13008 Marseille (FR)**
• **L'Helgouarc'h, Alain**
  **83390 Puget Ville (FR)**

(74) Mandataire: **Hirsch & Associés**
  **58, avenue Marceau**
  **75008 Paris (FR)**

(56) Documents cités:
  **FR-A- 2 739 927     FR-A- 2 785 988**
  **US-A- 3 435 657**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention a pour objet des dispositifs qui permettent l'installation et le contrôle de véhicules équipés de compteurs de distance(s), de vitesse(s), de temps, lorsque les indications de ces compteurs ont une incidence sur le prix ou sur des consignes de sécurité réglementaires.

Le secteur technique de l'invention est celui de la mesure d'une distance, d'une vitesse et (ou) d'un temps d'utilisation d'un véhicule.

Une des applications de l'invention est l'installation ou le contrôle des véhicules à équiper ou équipé d'un compteur indiquant une somme à payer en raison d'une distance parcourue par ce véhicule et (ou) un temps passé dans ce véhicule.

Une autre application est l'installation ou le contrôle d'un véhicule à équiper ou équipé d'un compteur à mémoire indiquant les différentes vitesses utilisées par ce véhicule pour parcourir une distance, le temps passé pour parcourir cette distance ainsi que les temps d'arrêt du véhicule durant le parcours de cette distance.

Une autre application est le contrôle et la mémorisation des performances de l'ensemble moteur d'un véhicule équipé d'un compte-tours, d'un compteur tachymètre, d'un capteur de position du levier de vitesse, d'un capteur de position de la direction, d'un capteur de position de la pédale de frein et d'une horloge.

On connaît depuis longtemps des équipements qui permettent de tels contrôles, on peut citer par exemple:

- Les bancs linéaires qui sur une distance de quelques mètres parcourus par le véhicule, permettent de calculer le coefficient W (soit le nombre de tours de câble en sortie de boîte de vitesses pour 1000 m).
  Ce type de dispositif ne permet pas de contrôler les notions de distances parcourues, de vitesses atteintes ou de temps passé sans démonter les compteurs des véhicules et les entraîner indépendamment du véhicule.
- Les bancs à rouleaux qui simulent une route, les roues motrices du véhicule à contrôler sont montées sur des rouleaux et tournent sur ces derniers le véhicule restant immobile. En connaissant le périmètre d'un rouleau, on peut simuler une distance parcourue et toutes les vérifications peuvent être réalisées.
  Cependant, à moins d'être d'un diamètre important (plusieurs dizaines de centimètres) engendrant des frais considérables lors de l'installation du dispositif, les rouleaux provoquent une déformation des pneumatiques néfaste à leur structure.
  La faible surface de contact engendre des glissements, la stabilité du véhicule est aléatoire notamment lorsque les roues motrices sont à l'avant.
  Les poids différents de différents véhicules nécessitent l'application de plusieurs facteurs de correction dans les méthodes de calcul.
- Les bancs à courroies du type du dispositif breveté N FRE 0297 007 déposé le 10 Juin 1988 permettent grâce à des ensembles poulies-courroies poly V de recevoir les roues motrices d'un véhicule en rotation.

De faible encombrement, ce dispositif assure une incomparable stabilité du véhicule, ne déforme pas la structure métallique des pneumatiques et, en raison de l'excellente adhérence entre la surface des pneumatiques et le revêtement des courroies, donne des résultats excellents au plan de la mesure de distance et de la vitesse. En revanche, ce système nécessite l'utilisation de deux dispositifs différents suivant que le contrôle concerne un véhicule léger ou un poids lourd. Les différences de voies, de diamètres des roues, de poids ne permettent pas la cohabitation de véhicules très différents.

Tous les systèmes évoqués ci-dessus, disposent de sous-ensembles électro-informatiques de gestion des informations plus ou moins évolués mais aucun, en l'absence de moyens adaptés, objet de la présente invention ne permet une utilisation compatible avec un autre système ou sans support des roues motrices sur rouleaux ou des courroies.

Le document FR-A-2 739 927 montre un dispositif de mesure permettant de contrôler un véhicule par prise d'informations sur une roue du véhicule. Ce dispositif comporte un codeur angulaire rotatif qui fournit des impulsions représentant l'évolution de la position angulaire d'une roue du véhicule. Le codeur angulaire rotatif est solidaire d'un dispositif de centrage comportant quatre bras de montage pouvant être fixés sur la jante de la roue. Un bras anti-rotation est monté à coulissement dans une articulation qui se fixe sur la carrosserie du véhicule à l'aide d'un aimant permanent pour immobiliser en rotation le codeur angulaire rotatif. La sortie du codeur angulaire rotatif est reliée à une centrale électro-informatique, agencée pour enregistrer les impulsions émises par le codeur angulaire rotatif. Une antenne-contact déclenche, puis stoppe, le comptage des impulsions du capteur angulaire lorsqu'elle détecte, le véhicule roulant, des obstacles d'étalonnage au sol, espacés l'un de l'autre selon une distance prédéterminée. Ainsi, la centrale électro-informatique peut déterminer la distance développée par tour de roue.

Le 1° problème posé est de pouvoir récupérer le mouvement des roues motrices d'un véhicule quel qu'il soit, VL ou PL, en réduisant les coûts de façon importante, de mesurer avec précision ce mouvement de façon à déterminer le nombre de tours de câble en sortie de boîte ou le nombre d'impulsions émis par le codeur du véhicule pour 1000 m de sorte que cette détermination puisse permettre le réglage de compteurs de distances de type taximètre, de compteurs de vitesse de type tachymètre, de compteurs enregistreurs de distances et de vitesses de type tachygraphe avant leur installation sur un véhicule donné.

Le 2° problème posé est de pouvoir récupérer le mouvement des roues motrices d'un véhicule quel qu'il soit, léger ou lourd, de mesurer avec précision ce mouvement de façon à pouvoir contrôler un quelconque véhicule équipé d'un compteur de distance, de vitesse ou un compteur enregistreur de vitesses et de distances une fois installé sans avoir à intervenir sur ces compteurs.

Le 3° problème posé est de pouvoir effectuer ce contrôle en tous lieux ; sur route, piste, garage et par tout moyens ; une roue motrice levée, une ou deux roues motrices posées sur un banc à rouleaux, une ou deux roues motrices posées sur un banc à courroies que les différents bancs soient de simples supports ou eux-même étalonnés.

Le 4° problème est de permettre les mesures décrites sur des véhicules équipés de codeurs électroniques, avec la même précision que ceux dont la prise d'information est mécanique ; en effet les codeurs électroniques installés sur les véhicules émettent peu d'impulsions de signaux, ainsi, plusieurs dizaines de centimètres peuvent séparer deux impulsions.

La présente invention vise à traiter au moins l'un des problèmes ci-dessus.

A cet effet, l'objet de la présente invention est défini par la revendication 1 ci-jointe. Le dispositif, pour prendre des informations angulaires sur une roue, comporte un centreur de fixation rapide équilibré doté d'un système permettant le rapprochement ou l'éloignement simultané de trois bras de montage amovible, télescopiques ou interchangeables, de son centre.

Les trois bras télescopiques ou interchangeables permettent la fixation rapide de l'ensemble sur la partie intérieure ou extérieure de la jante d'une roue d'un véhicule quelconque par tension ou pression au moyen d'une clé à actionner qui assure le blocage sur la jante. Les bras télescopiques ou interchangeables ne sont pas perpendiculaires à l'axe du centre de fixation, mais se déploient suivant un angle qui tend à éloigner le centreur de la jante.

Le centreur est solidaire et entraîne en rotation l'axe d'un capteur angulaire compteur-codeur d'impulsions relié à une interface électro-informatique de gestion. Le corps du compteur-codeur est solidaire d'un axe de préférence télescopique de fixation à la carosserie, qui assure son anti-rotation. L'axe télescopique d'anti-rotation est avantageusement doté à son extrémité d'une rotule qui reçoit un axe perpendiculaire à l'axe anti-rotation, lui-même doté d'une rotule qui reçoit l'axe d'un aimant permanent, qui se fixe par simple magnétisme sur une partie métallique du véhicule.

Les différents axes et rotules assurent des articulations dans les différents plans qui absorbent les variations de distance entre l'axe du centreur solidaire de la roue motrice et la fixation sur la carrosserie du véhicule : (variations de distance dues à l'action de la suspension ou à l'action de la direction dans le cas d'un véhicule à traction).

Le dispositif comporte au moins un capteur optique relié à l'interface de gestion. Le capteur optique est assujetti à un support lui-même solidaire d'un aimant permanent qui se fixe sur la carrosserie du véhicule. Le capteur optique change d'état au passage d'une bande blanche ou réfléchissante qui marque très précisément, le début et la fin d'une piste étalonnée au sol.

Dans une forme de réalisation, le dispositif comporte un codeur-capteur d'impulsions relié à l'interface de gestion et équipé d'un adaptateur permettant la liaison rapide avec le câble tachymètre (sortie de boîte de vitesses) d'un véhicule quelconque.

Dans encore une autre forme de réalisation, le dispositif comporte une fiche reliée à l'interface de gestion. La fiche est connectée à une prise d'informations (impulsions) électriques ou électroniques générées par le codeur du véhicule lui-même.

Dans encore une autre forme de réalisation, le dispositif comporte une fiche reliée à l'interface électro-informatique de gestion. La fiche est connectée en sortie de volant magnétique ou au compte-tours du véhicule.

Dans encore une autre forme de réalisation, le dispositif comporte un sous-ensemble électro-informatique portable composé d'une interface de gestion recevant les informations du codeur optique, du codeur de roue, du codeur de véhicule, des fiches de prises d'informations. Le sous-ensemble électro-informatique est doté d'un bloc d'alimentation 12 V ou 24 V continu, d'un bloc d'alimentation 110 V ou 220 V, de fusibles, d'embases permettent la connexion rapide aux différentes sources d'informations. Le sous-ensemble électro-informatique comporte ou est relié à un bloc d'impression qui permet l'édition de tickets de certification des essais, déterminations ou contrôles effectués, les caractéristiques du véhicule, des pneumatiques, la date, le nom du service, de l'installateur ou du vérificateur. Le sous-ensemble électro-informatique comporte une carte interface de gestion dotée d'une mémoire, un calculateur, une horloge. Le dit sous-ensemble électro-informatique comporte ou est relié à un micro-ordinateur portable pourvu d'un logiciel de commande, d'un écran et d'un clavier.

Le dispositif de l'invention sert pour la mesure et pour l'installation et la vérification des véhicules à équiper ou équipés de compteurs taximètres, tachymètres, tachygraphes ou de distances.

Les avantages de ce dispositif réalisé suivant l'invention sont multiples, sur le plan de la commodité, de la fiabilité, de l'économie réalisée. En effet le dispositif réalisé suivant l'invention assure des résultats excellents, que les mesures s'effectuent sur route, sur bancs à rouleaux, sur banc à courroies, sur banc simple support, ou, une roue motrice levée.

L'ensemble du dispositif peut être utilisé sur tous les types de véhicules légers ou lourds, à traction ou propulsion, avec une source d'informations mécanique ou électronique.

Une application de ce dispositif est une aide précieuse aux calculs d'une distance non rectiligne, d'une superficie, d'intervalles, de quantités.

Une application de ce dispositif, outre le contrôle d'une distance parcourue ou le contrôle de vitesse, est une aide précieuse au réglage d'un moteur durant des essais sur route ou sur banc ou au réglage de freinage et du parallélisme.

La description suivante se réfère aux dessins annexés qui représentent, sans aucun caractère limitatif, un exemple de réalisation d'un dispositif suivant l'invention.

Cet exemple n'est pas exhaustif et d'autres dispositions peuvent être envisagées, en particulier, on a représenté une prise d'informations sur une roue motrice, mais une sur chaque roue motrice ou non est possible. Le centreur de fixation rapide est représenté d'une conception mécanique mais, il pourrait être d'une conception hydraulique ou pneumatique, il est représenté en pression, mais pourrait l'être en traction. Le véhicule est représenté roues motrices au sol mais pourrait être sur un banc à rouleaux ou courroies, ou une roue motrice levée.

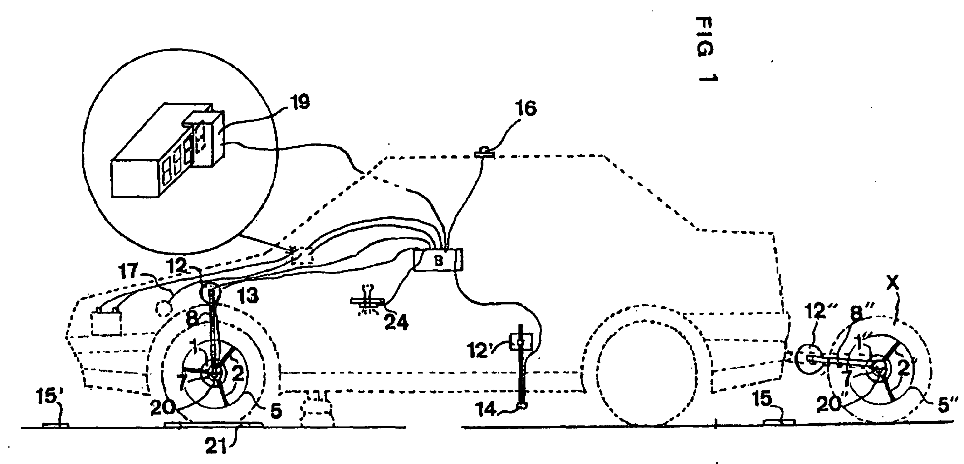

- La figure 1 est une vue des différents sous-ensembles,

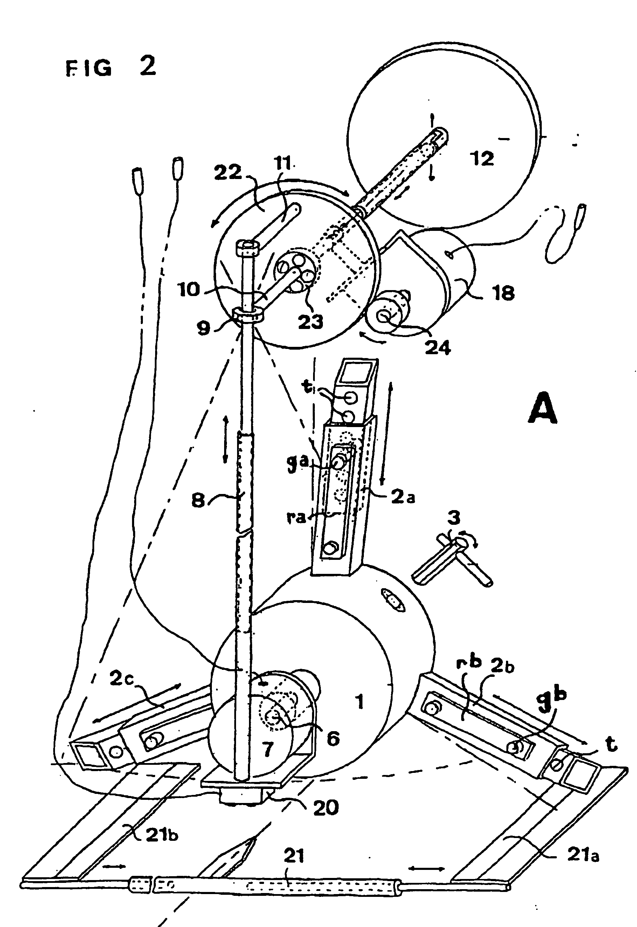

- la figure 2 est une vue du système de fixation et de prise d'informations sur une roue motrice avant, et

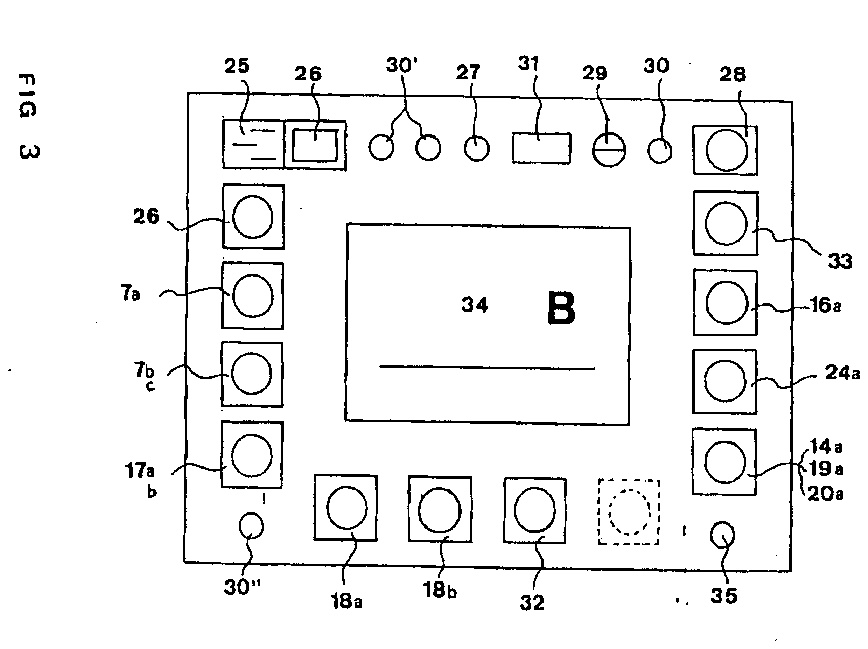

- la figure 3 est une vue du sous-ensemble électro-informatique de gestion.

Le sous-ensemble A de détection et de différentes prises d'informations comporte :

- un centreur de fixation rapide 1 équilibré composé d'un "mandrin" sur les mors duquel sont fixés les bras télescopiques 2a, 2b et 2c suivant un angle qui tend à éloigner le corps du centreur de fixation rapide 1 de la jante du véhicule. Les parties mobiles du bras 2a, 2b et 2c sont réglables en longueur grâce aux trous percés tous les centimètres (t), aux goupilles (g) de butées dont l'effet peut être instantanément supprimé par simple traction. Les ressorts (r) contraindront les dites goupilles à pénétrer dans les trous désirés repérés 13", 14", 15". L'ajustement et le blocage sur la jante 5 se feront grâce à la clé 3 qui actionnera la vis et les mors du mandrin,
- un codeur de roue 7 à grande résolution (+100 imp/tr) dont l'axe 6 est solidaire du centreur de fixation rapide 1 compte des impulsions dès que le capteur optique 14 fixé à la carrosserie du véhicule par un aimant permanent 12' et relié au sous-ensemble B électro-informatique de gestion donne le départ à son passage sur une première bande blanche ou réfléchissante 15.

Le codeur de roue 7 cesse son comptage dès que le capteur optique 14 donne l'arrivée d'une piste étalonnée de plusieurs mètres ou dizaines de mètres servant de valeur de référence à son passage sur une bande blanche ou réfléchissante 15'.

La distance de la piste étalonnée a désormais une correspondance en nombre d'impulsions mémorisées par le sous-ensemble B électro-informatique de gestion qui calcule l'Unité de Roue, c'est-à-dire la distance entre deux impulsions, qui servira par la suite à mesurer une distance parcourue, ou, différentes vitesse atteintes pour parcourir une distance, ou différentes vitesses atteintes à différents régimes moteur.

Le sous-ensemble A de détection et de différentes prises d'informations comporte une fiche de connexion 17 au codeur tachymètre du véhicule ou un codeur 17' relié au câble tachymètre en sortie de boîte de vitesses.

La comparaison entre le nombre d'impulsions captées sur le véhicule 17 ou 17' et le nombre d'impulsions captées sur le codeur de roue 7 pour une distance donnée permettra de déterminer le coefficient caractéristique W du véhicule exprimé en tr/km ou imp/m.

Dans le cas où la prise d'informations du véhicule se fera grâce à la fiche de connexion 17 du codeur tachymètre du véhicule, le nombre d'impulsions sera faible et l'incertitude importante. Le dispositif permettra dans ce cas une détermination très précise malgré tout.

C'est la 1° impulsion reçue par la fiche de liaison 17 qui donnera le départ du comptage du codeur de roue 7.

Lorsque le codeur de roue 7 à grande résolution (200 imp/tr par exemple) aura capté le nombre d'impulsions correspondant à la distance de référence, le sous-ensemble B électro-informatique de gestion enregistrera soit l'impulsion du codeur véhicule 17 qui précède, soit l'impulsion du codeur véhicule 17 qui suit le nombre d'impulsions du codeur de roue 7 qui correspond à la distance de référence (dans ce cas, les impulsions générées par le codeur de roue 1 après le nombre d'impulsions correspondant à la distance de référence seront mémorisées).

Une simple règle de trois en mémoire permettra alors d'établir avec précision et quelle que soit la vitesse durant la mesure, la valeur du coefficient caractéristique W en réduisant au maximum les incertitudes au départ et à l'arrivée.

Exemple : mesure de référence 100 m = 11095 impulsions sur le codeur de roue 1 et 585 impulsions sur la fiche de liaison 17 au codeur tachymètre électronique du véhicule.

Détermination du coefficient caractéristique W : implique que :

- par excès :

$$100 \text{ m} = 586 \text{ imp} \times 11095/11100 = 585,7 \text{ imp} / 100 \text{ m}$$

coefficient W : 5857 imp / km

- par défaut :

$$100 \text{ m} = 585 \text{ imp} \times 11095/11081 = 585,7 \text{ imp} / 100 \text{ m}$$

coefficient W : 5857 imp / km

Le contrôle des tarifs ou de la vitesse pourra s'effectuer sans intervention sur les compteurs déjà installés quel que soit le protocole choisi, sur route, sur banc ou roue levée, et ce à des vitesses pouvant largement dépasser 100 km/h.

En effet, après la procédure d'étalonnage, grâce au codeur de roue 1 et au capteur optique 14, il suffira à l'opérateur de donner le top de départ et le top d'arrivée au passage de deux chutes, en version manuelle, pour comparer les résultats obtenus par le codeur du véhicule 17 et ceux obtenus par le codeur de roue 7 à grande résolution.

En version automatique c'est un détecteur optique 19 qui donnera le top de départ et le top d'arrivée en détectant les changements d'état du taximètre au moment des chutes.

Le sous-ensemble A de détection et de différentes prises d'informations peut en outre comporter un capteur angulaire connu sur la colonne de direction de sorte que les changements de directions puissent être mesurés et enregistrés.

Dans le cas où l'on ne souhaite pas utiliser un capteur angulaire sur la colonne de direction, il est utilisé un codeur double entrées 18 indiquant le sens de braquage, en effet, le capteur optique ou magnétique 20 assujetti à l'axe télescopique 8, véhicule à l'arrêt et volant braqué progressivement, détecte au sol les bandes réfléchissantes ou magnétiques 21a et 21b qui matérialisent des angles de braquage. L'axe anti-retour télescopique 8 durant le braquage pivote autour de la rotule 9 et entraîne la roue de multiplication 22 montée sur roulement articulé 23 qui entraîne l'axe 24 du codeur 18 par friction ou engrenage.

Le nombre d'impulsions captées par le codeur 18 entre les deux marques réfléchissantes ou magnétiques détectées par le capteur optique ou magnétique 20 est mémorisé par le sous-ensemble électro-informatique de gestion B.

La correspondance entre les angles de braquage et un nombre d'impulsions est désormais établie. Lors d'un parcours, elle permet de déterminer de façon précise les changements de direction, leurs amplitudes et de mesurer des distances non rectilignes, des superficies, des tracés géométriques, des intervalles de plantation et permet l'édition d'un graphe représentant le tracé d'un parcours vu de dessus avec indications : de distances, de temps, de virages, de freinages, de changements de vitesses, de régimes du moteur, de vitesses, afin de pouvoir analyser, comparer et améliorer les performances d'un véhicule et (ou) de son conducteur.

A l'arrêt, monté sur les deux roues avant, le sous-ensemble A de mesure angulaire permet de contrôler le parallélisme.

Le sous-ensemble A de détection et de différentes prises d'informations peut en outre comporter :

- un capteur de positions 24 sur le levier de vitesses de sorte que les changements de vitesses puissent être enregistrés,
- une fiche de connexion au compte-tours du moteur de sorte qu'une relation puisse être établie entre la vitesse, le rapport utilisé, et le régime moteur,
- un capteur angulaire 16 d'horizontalité relié au sous-ensemble électro-informatique de gestion B de sorte qu'une déclivité, une pente et son pourcentage puissent être mesurés, mémorisés et permettre l'impression d'un graphe restituant le profil d'un terrain ou d'un parcours.

Le sous-ensemble A de détection et de différentes prises informations monté sur les deux roues avant, et (ou) les deux roues arrière peut en outre servir à mesurer et à comparer l'efficacité et l'intensité d'un freinage par comparaison des valeurs enregistrées par les codeurs 1 et 7' exprimées en pourcentage. Dans le cas où la mesure de différentes distances de freinage à différentes vitesses avant l'immobilisation totale d'un véhicule est souhaitée, une roue X non freinée dotée d'un sous-ensemble A" de prises d'informations est tractée par une barre de remorquage connue. La dite roue non freinée X indique précisément la distance puisque, contrairement aux roues du véhicule, elle ne subit pas les contraintes de freinage. Le début et la fin du freinage peuvent être donnés par le signal électrique des feux arrière de freinage ou donnés par un capteur de position assujetti à la pédale de frein.

Le sous-ensemble B électro-informatique de gestion portable comporte une embase 25 pour alimentation en 220 V ou 110 V alternatif, un interrupteur de mise sous tension 26, un voyant 27, de mise sous tension, une embase 25 pour l'alimentation en 12 V ou 24 V continu, un interrupteur 29 pour l'alimentation en continue, des fusibles 30, 30' et 30", une embase de connexion 31 à un micro-ordinateur portable, deux embases de connexion au(x) codeur(s) de roue(s) 7a, 17b, une embase 17a, b de connexion au codeur de véhicule et au compte-tours, une embase de connexion 14, 19, 20a aux détecteurs optiques ou magnétiques, deux embases de connexion, 18a et 18b aux capteur-codeurs de directions, une embase 24a de connexion au capteur de positions du levier de vitesses, une embase 16a de connexion au capteur d'horizontalité, une embase 32 de connexion au détecteur de positions de pédale de frein, un bloc imprimante 34, une embase 33 de connexion à une imprimante externe connue, un bouton avance papier 35, une carte micro-contrôleur, un bloc d'alimentation, une horloge, un calculateur, une mémoire, une interface de communication, un logiciel.

**Revendications**

1. Dispositif de mesure pour contrôler un véhicule équipé d'un compteur de mesure de distance ou de vitesse par prise d'informations sur une roue du véhicule, le dispositif comportant un capteur angulaire rotatif (7), agencé pour fournir des informations angulaires représentant l'évolution de la position angulaire d'une roue du véhicule, le capteur angulaire (7) comporte un axe (6) solidaire d'un dispositif de centrage (1) sous forme d'un mandrin comportant au moins trois bras réglables (2a, 2b, 2c) de montage et de centrage de l'axe (6) du capteur angulaire (7) de façon axée sur la jante (5) de la roue, fixés sur les mors du mandrin suivant un angle qui tend à éloigner le corps du dispositif de centrage (1) de la jante du véhicule, les dits bras (2a, 2b, 2c) n'étant pas perpendiculaires à l'axe du dispositif de centrage (1),
et avec un bras anti-rotation (8), une articulation (9) et un aimant permanent (12) qui se fixe sur la carrosserie du véhicule,
le corps du capteur angulaire (7) étant immobilisé en rotation par le bras (8) télescopique comportant une rotule (9) qui reçoit un axe (10) perpendiculaire au bras (8) et une rotule qui reçoit l'axe de l'aimant (12), les dits bras, axes et rotules formant des articulations entre le point fixe du capteur angulaire (7) et la position de l'aimant permanent (12) prévu pour être fixé à l'aplomb de l'axe de la roue,
le dispositif comportant un moyen de blocage pneumatique, hydraulique ou par vissage d'une clé (3), pour monter et bloquer les bras (2a, 2b, 2c) sur la jante (5) en pression ou tension, par rapprochement ou éloignement simultané des bras (2a, 2b, 2c) du centre du dispositif de centrage (1),
le capteur angulaire (7) étant relié en sortie à un sous-ensemble de gestion (B) et transformant une distance étalonnée au sol en nombre d'impulsions,
**caractérisé par le fait que** le dispositif comporte au moins un capteur optique (14) fixé à la carrosserie grâce à un aimant permanent (12') et relié au sous-ensemble (B) électro-informatique de gestion,
que le capteur optique (14) est angencé pour déclencher, puis stopper, le comptage des impulsions du capteur angulaire (7) lorsqu'il détecte, le véhicule roulant, des bandes blanches ou réfléchissantes (15 et 15') qui délimitent la distance étalonnée au sol, de sorte que : la distance entre deux impulsions, appelée Unité de Roue, peut être déterminée précisément et mise en mémoire, permettant de calculer une distance ou une vitesse ultérieurement,

- le dispositif comportant en outre une fiche de connexion (17) qui relie une source d'impulsions spécifique de faible résolution angulaire tel qu'un codeur propre au véhicule ou un compteur du système ABS de freinage, au sous-ensemble (B) électro-informatique de gestion,
- le sous-ensemble (B) électro-informatique de gestion étant agencé pour capter, les roues du véhicule tournant, simultanément les impulsions de référence du capteur angulaire (7) et les impulsions en provenance de la source spécifique (17) du véhicule, le capteur angulaire étant à plus grande résolution que la source spécifique (17),
de sorte que la première impulsion lue sur la source d'impulsions (17), à plus faible résolution, donne le départ du comptage des impulsions de référence du capteur angulaire (7) à plus grande résolution,
- que lorsque le capteur angulaire (7) aura capté l'ultime impulsion de référence, l'impulsion en provenance de la source spécifique (17) du véhicule qui précède ou suit la dite impulsion ultime de référence stoppe les comptages qui sont mémorisés,
- que les impulsions générées par le capteur angulaire (7) après l'ultime impulsion de référence jusqu'à l'arrêt des comptages, permettent de déterminer précisement le coefficient caractéristique W d'un véhicule qui représente le nombre d'impulsions de la source spécifique du véhicule par distance donnée, exprimé en imp / km, même sur courte distance,

le dispositif étant adapté pour qu'en version manuelle, un opérateur puisse comparer les résultats obtenus par la source d'impulsion (17) et ceux obtenus par le capteur angulaire (7).

**2.** Dispositif selon la revendications 1 , dans lequel le dit axe (10) perpendiculaire au bras télescopique (8), portant le corps du capteur angulaire (7), porte un capteur codeur (18) à double entrée qui lui est assujetti,

- le codeur(18) relié au sous-ensemble (B) électro-informatique de gestion étant entraîné en rotation par une roue de multiplication (22) montée sur roulement articulé (2, 3) et entraînée en rotation par un axe de liaison (11) solidaire du bras télescopique (8) qui pivote autour d'une rotule (9), **caractérisé en ce que**
- le bras télescopique (8) comporte un capteur optique ou magnétique (20) relié au sous-ensemble (B) électro-informatique de gestion qui étant agencé pour détecter, véhicule à l'arrêt, des amplitudes de braquage à droite et à gauche matérialisées par au moins deux marques (21a et 21b) de sorte que :

- les amplitudes de braquage traduites en nombre d'impulsions par le codeur à double entrée (18) permettent, le véhicule roulant, d'indiquer les changements de directions et leurs amplitudes au moyen du sous-ensemble (B) électro-informatique de gestion en vue de déterminer par un graphe, le tracé d'un parcours, calculer une superficie, un volume d'enrobé, des intervalles de plantations.

**3.** Dispositif suivant l'une des revendications 1 ou 2, dans lequel un capteur optique (19), relié au sous-ensemble (B) électro-informatique de gestion, est agencé pour être positionné devant le chiffre des unités d'un dit compteur taximètre, **caractérisé en ce que** :

- le changement d'état des segments lumineux du taximètre au moment d'une chute correspondant à une distance ou à une durée, donne le départ puis la fin du comptage du capteur angulaire (7) à grande résolution permettant ainsi la comparaison entre la distance mémorisée par le compteur taximètre et le capteur angulaire (7) à grande résolution, d'afficher les distances enregistrées par l'un et par l'autre, de les imprimer et d'exprimer la comparaison des résultats en pourcentage.

**4.** Dispositif selon l'une des revendications 1 à 3, dans lequel deux sous-ensembles (A) de prises d'informations sont agencés pour être montés sur les roues avant ou arrière d'un véhicule et reliés au sous-ensemble (B) électro-informatique de gestion, **caractérisé**
**en ce qu'**il comporte un capteur de position sur la pédale de frein et/ou une liaison sur le signal électrique fourni par les feux arrière de freinage,
**en ce qu'**il comporte un troisième sous-ensemble (A") ou l'un quelconque des sous-ensembles (A) ou (A') de prises d'informations monté sur une roue (X) non freinée attelée au véhicule par un bras de remorquage de sorte que :

la vitesse du véhicule mesurée par les codeurs (7 et 7'), le commencement du freinage et la fin de ce dernier permettent de comparer l'efficacité du freinage de la roue droite avec celui de la roue gauche exprimé en pourcentage, de déterminer la distance de freinage nécessaire à l'immobilisation du véhicule à une vitesse donnée grâce à la roue (X) non freinée en vue du réglage du système de freinage.

**5.** Dispositif suivant les revendications 1 à 4, **caractérisé en ce qu'**il comporte deux sous-ensembles (A et A') de prises d'informations :

- les dits sous-ensembles (A et A') étant montés sur les roues avant d'un véhicule et reliés au sous-ensemble (B) électro-informatique de gestion de sorte que :

les angles de braquage matérialisés par des marques (21a et 21b) positionnées précisément dans l'axe d'une roue soient détectés par un capteur (20), convertis en nombre d'impulsions par un codeur (18), puissent être comparés aux angles de braquage matérialisés par des marques (21a' et 21b') positionnées précisément dans l'axe de l'autre roue, détectés par un capteur (20'), convertis en nombre d'impulsions par un codeur (18') en vue d'un contrôle de parallélisme du train avant.

**6.** Dispositif suivant les revendication 1 à 5, comportant les sous-ensembles (A et A'), un cordon du volant magnétique ou du compte-tours du véhicule à une fiche de connexion (17'), un capteur de positions sur la colonne de direction, un capteur de positions (24) du levier de vitesses, un capteur d'horizontalité (16), reliés au sous-ensemble (B) électro-informatique de gestion de sorte

- qu'une relation puisse être établie entre les distances, les temps, les vitesses atteintes, les régimes, les

**EP 1 292 833 B1**

rapportes utilisés, les temps de freinage durant un parcours ;
- qu'un graphe puisse être édité qui matérialise le tracé du parcours ou du circuit,
- qu'un autre graphe puisse être édité qui matérialise le profil de ce circuit ou ce parcours et qui permet l'établissement de cette relation en vue de comparer les performances de différents véhicules ou différents conducteurs, de contribuer à l'apprentissage de ces derniers, ou à la mise au point d'un véhicule.

7.   Dispositif suivant l'une des revendications de 1 à 6, dans lequel le sous-ensemble (B) électro-informatique de gestion transportable est intégré et protégé dans une valise, **caractérisé :**

- **en ce qu'**il comporte un micro-contrôleur, une mémoire, un calculateur, une interface de communication et différentes embases de connection permettant la liaison avec les différents codeurs et capteurs du sous-ensemble (A) de prise d'information, et
- **en ce que** le sous-ensemble (B) électro-informatique de gestion, associé à un sous-ensemble (A) de prise d'information, permet le contrôle d'un véhicule de sorte que puissent être déterminés les caractéristiques de ce véhicule, le coefficient caractéristique W de ce véhicule, le résultat d'un contrôle des tarifs d'un compteur taximètre, le résultat d'un contrôle d'un chrono-tachygraphe, le résultat d'un contrôle de parallélisme, le tracé et/ou le profil d'un parcours, la détermination d'une surface, le calcul d'un volume d'enrobé, le calcul d'intervalles, en vue de l'impression de ces résultats sous forme de textes, de chiffres et/ou de graphes.

**Claims**

1.   Measuring apparatus for checking a vehicle fitted with an odometer or speedometer by acquisition of information at a vehicle wheel, the apparatus including a rotational angle sensor (7) arranged to supply angular information concerning changes in the angular position of a vehicle wheel, the angle sensor (7) including a shaft (6) integral with a centring device (1) in the form of a chuck having a least three adjustable arms (2a, 2b, 2c) for mounting and centring of the shaft (6) of the angle sensor (7) in centred fashion at the wheel rim (5), secured on the jaws of the chuck at an angle tending to distance the body from the centring device (1) of the vehicle rim, said arms (2a, 2b, 2c) not being perpendicular to the axis of the centring device (1), and with an anti-rotational arm (8), a pivot arrangement (9) and a permanent magnet (12) which is secured onto the vehicle bodywork,
the body of the angle sensor (7) being prevented from rotating by the telescopic arm (8) including a swivel joint (9) that receives a shaft (10) perpendicular to the arm (8) and a swivel joint which receives the shaft of the magnet (12), said arm, shafts and swivel joints forming articulations between the fixed point of the angle sensor (7) and the position of the permanent magnet (12) designed to be secured vertically aligned with the vehicle wheel,
the apparatus including a means for pneumatic, hydraulic or screw locking of a key (3) for mounting and blocking said arms (2a, 2b, 2c) on the wheel rim (5) under pressure or tension, by simultaneously bringing the arms (2a, 2b, 2c) closer to or further away from the centre of the centring device (1),
the angle sensor (7) having the output thereof connected to a management subassembly (B) and transforming a scaled distance on the ground into a number of pulses,
**characterised by** the fact that the apparatus includes at least one optical sensor (14) secured to the bodywork by a permanent magnet (12') and connected to the electronic and computing management subassembly (B),
by the fact that the optical sensor (14) is arranged to initiate and then stop counting of pulses by the angle sensor (7) when it senses, with the vehicle in motion, white or reflecting strips (15 and 15') delimiting the scaled distance on the ground, whereby:

the distance between two pulses referred to as a wheel unit can be accurately determined and stored, making it possible to subsequently calculate a distance or a speed,

- the apparatus further including a connection plug (17) which connects a specific source of low angular resolution pulses such as an encoder specific to the vehicle or an ABS braking system counter to the electronic and computing management subassembly (B),
said electronic and computing subassembly (B) being arranged to sense the vehicle wheel is rotating, simultaneously the reference pulses from the angle sensor (7) and the pulses originating from the specific source (17) of the vehicle, the angle sensor being of higher resolution than the specific source (17),
whereby the first pulse read on the lower resolution pulse source (17) initiates counting of reference pulses by the angle sensor (7) of higher resolution,
- by the fact that when the angle sensor (7) has sensed the last reference pulse, that pulse originating from the specific source (17) of the vehicle which precedes or follows said final reference pulse stops the counting and these are stored,

- by the fact that the pulses generated by the angle sensor (7) after the final reference pulse up until stopping of counting, make it possible to determine accurately the characteristic coefficient W of a vehicle which represents the number of pulses from the specific source of the vehicle per given distance expressed in pulses/kilometre, even over a short distance,

the apparatus being adapted whereby, in a manual version, an operator may compare the results obtained by the pulse source (17) and those obtained by the angle sensor (7).

2. The apparatus according to claim 1, in which said shaft (10) perpendicular to the telescopic arm (8) carrying the body of the angle sensor (7) carries a double input encoding sensor (18) slaved therewith,

- the encoder (18) connected to the electronic and computing management subassembly (B) being driven in rotation by a multiplication wheel (22) mounted on an articulated bearing (2, 3) and driven in rotation by a connecting shaft (11) integral with the telescopic arm (8) which pivots about a swivel joint (9), **characterised in that**
- the telescopic arm (8) includes an optical or magnetic sensor (20) connected to the electronic and computing management subassembly (B) which being arranged to sense, with the vehicle stationary, the left and right hand amplitude of steering lock made material by at least two marks (21a and 2 1 b) whereby:
- steering lock amplitudes converted to a number of pulses by the double input (18) encoder make it possible, with the vehicle in motion, to indicate steering changes and the amplitude thereof by means of the electronic and computing management subassembly (B) for determining, by a graph, the path of a distance travelled, to calculate a surface area, a volume of surfacing, intervals between vegetation.

3. The apparatus according to one of claims 1 or 2, in which an optical sensor (19), connected to the electronic and computing management subassembly (B) **is arranged to be positioned in front of the units figure of a said taximeter, characterised in that**:

- the change of state of the light segments of the taximeter at the instance of a drop corresponding to a distance or duration, gives the beginning and the end of high resolution counting by the angle sensor (7) thereby allowing comparison between the distance stored by the taximeter counter and the high resolution angle sensor (7), to display distances recorded by the one and by the other, to print them and express the results of comparison in percentage.

4. Apparatus according to one of claims 1 to 3, in which two information acquisition subassemblies (A) are arranged to be mounted on the front or rear wheels of a vehicle and connected to the electronics and computing management subassembly (B), **characterised in that**
it includes a position sensor on the brake pedal and/or a link to the electrical signal supplied by the rear braking lights, **in that** it includes a third subassembly (A") or any one of subassemblies (A) or (A') for acquiring information mounted on a non-braked wheel (X) hitched to the vehicle by a towing arm whereby:

vehicle speed can be measured by the encoders (7 and 7'), the commencement of braking and the end thereof make it possible to compare the effectiveness of braking of the right hand wheel with that of the left-hand wheel expressed as a percentage, to determine the braking distance needed to bring the vehicle to a halt at a given speed thanks to the non-braked wheel (X) with a view to adjusting the braking system.

5. The apparatus according to claims 1 to 4, **characterised in that** it comprises two information acquisition subassemblies (A and A'):

- the said subassemblies (A and A') being mounted on the front wheels of a vehicle and connected to the electronics and computing management subassembly (B) whereby:

the steering lock angles made material by marks (21a and 21b) accurately positioned in the axis of a wheel sensed by a sensor (20), converted into a number of pulses by an encoder (18), can be compared with the steering lock angles made material by the marks (21a and 21b) accurately positioned in the axis of the other wheel, sensed by a sensor (20') converted into a number of pulses by an encoder (18') for checking parallelism of the front wheel assembly.

6. The apparatus according to claims 1 to 5, comprising the subassemblies (A and A'), a lead from the magnetic flywheel or tachometer of the vehicle to a connection plug (17'), a position sensor on the steering column, a position sensor (24) for the gear shift lever, a horizontality sensor (16), connected to the electronic and computing management subassembly (B) whereby a relation can be established between distances, times, speeds attained, running conditions, gears employed, braking time during a trip;

- a graph can be obtained materialising the path of the trip or circuit,
- a further graph can be obtained materialising the profile of this circuit or trip and which makes it possible to establish said relation with a view to comparing performance of various vehicles or various drivers, for contributing to the learning of the latter, or for vehicle development.

7. The apparatus according to one of claims 1 to 6, in which the electronic and computing management subassembly (B) is transportable and incorporated in, and protected by, a case, **characterised:**

- **in that** it includes a microcontroller, a memory, a computing device, communications interface and various connection sockets providing links to the various encoders and sensors of the information acquisition subassembly (A), and
- **in that** the electronic and computing management subassembly (B), in association with an information acquisition subassembly (A) makes it possible to check a vehicle whereby the characteristics of the vehicle, the characteristic coefficient W thereof, the results of checking tariffs on a taximeter, the result of checking a chronometer-tachometer, results of a parallelism check, the path and/or profile of a trip, determination of a surface, calculation of a volume of surfacing, interval calculation can be determined, for the purpose of printing these results in the form of text, figures and/or graphs.

**Patentansprüche**

1. Messvorrichtung zum Kontrollieren eines Fahrzeugs, das mit einem Entfernung- oder Geschwindigkeitsmesszähler durch Aufnahme von Informationen an einem Rad des Fahrzeugs ausgestattet ist, wobei die Vorrichtung einen Drehwinkelgeber (7) aufweist, der eingerichtet ist, um Winkelinformationen zu liefern, die die Entwicklung der Winkelposition eines Rads des Fahrzeugs darstellen, wobei der Winkelgeber (7) eine Achse (6) aufweist, die mit einer Zentriervorrichtung (1) in Form einer Hülse fest verbunden ist, die mindestens drei einstellbare Arme (2a, 2b, 2c) zum Montieren und Zentrieren der Achse (6) des Winkelgebers (7) auf der Felge (5) des Rads ausgerichtet aufweist, die auf den Backen der Hülse gemäß **einem Winkel befestigt sind, der dazu** tendiert, den Körper der Zentriervorrichtung (1) von der Felge des Fahrzeugs zu entfernen, wobei die Arme (2a, 2b, 2c) zu der Achse der Zentriervorrichtung (1) nicht senkrecht sind, und mit einem Drehschutzarm (8), einer Anlenkung (9) und einem Dauermagneten (12), der an der Karosserie des Fahrzeugs befestigt ist,
wobei der Körper des Winkelgebers (7) in Drehung von dem Teleskoparm (8) festgestellt ist, der ein Kugelgelenk (9) aufweist, das eine Achse (10) senkrecht zu dem Arm (8) aufnimmt, und ein Kugelgelenk, das die Achse des Magneten (12) aufnimmt, wobei die Arme, Achsen und Kugelgelenke Anlenkungen zwischen dem Fixpunkt des Winkelgebers (7) und der Position des Dauermagneten (12), der vorgesehen ist, um senkrecht zu der Radachse befestigt zu werden, bilden,
wobei die Vorrichtung ein pneumatisches, hydraulisches oder Schraubblockierungsmittel eines Schlüssels (3) aufweist, um die Arme (2a, 2b, 2c) unter Druck oder Spannung auf der Felge (5) zu montieren und zu blockieren, indem die Arme (2a, 2b, 2c) gleichzeitig der Mitte der Zentriervorrichtung (1) genähert oder von ihr entfernt werden,
wobei der Winkelgeber (7) am Ausgang mit einer Verwaltungsunterbaugruppe (B) verbunden ist und eine geeichte Entfernung am Boden in eine Anzahl von Impulsen umwandelt,
**dadurch gekennzeichnet, dass** die Vorrichtung mindestens einen optischen Sensor (14) aufweist, der dank eines Dauermagneten (12') an der Karosserie befestigt und mit der elektro-informatischen Verwaltungsunterbaugruppe (B) verbunden ist,
dass der optische Sensor (14) eingerichtet ist, um das Zählen der Impulse des Winkelgebers (7) auszulösen und zu stoppen, wenn er, während das Fahrzeug fährt, weiße oder reflektierende Fahrbahnmarkierungsstreifen (15 und 15') erfasst, die die geeichte Entfernung am Boden abgrenzen, so dass:

die Entfernung zwischen zwei Impulsen, die Radeinheit genannt wird, präzis bestimmt und gespeichert werden kann, um es später zu erlauben, eine Entfernung oder Geschwindigkeit zu berechnen,

- wobei die Vorrichtung ferner einen Verbindungsstecker (17) aufweist, der eine spezifische Impulsquelle mit niedriger Winkelauflösung, wie zum Beispiel ein zum Fahrzeug gehörender Kodierer oder ein Zähler des ABS-Bremssystems, mit der elektro-informatischen Verwaltungsunterbaugruppe (B) verbindet,
- **wobei die elektro**-informatische Verwaltungsunterbaugruppe eingerichtet ist, um, während die Räder des Fahrzeugs drehen, gleichzeitig die Bezugsimpulse des Winkelgebers (7) und die Impulse zu erfassen, die von der spezifischen Quelle (17) des Fahrzeugs stammen, wobei der Winkelgeber eine größere Auflösung hat als die spezifische Quelle (17),

so dass der erste Impuls, der auf der Impulsquelle (17) mit niedrigerer Auflösung gelesen wird, den Start des Zählens der Bezugsimpulse des Winkelgebers (7) mit größerer Auflösung auslöst,

- dass, wenn der Winkelgeber (7) den letzten Bezugsimpuls erfasst hat, der Impuls, der von der spezifischen Quelle (17) des Fahrzeugs stammt, der dem letzten Bezugsimpuls vorausgeht oder auf ihn folgt, die Zählungen, die gespeichert werden, stoppt,
- dass es die von dem Winkelgeber (7) nach dem letzten Bezugsimpuls und bis zum Stoppen der Zählungen erzeugten Impulse erlauben, den charakteristischen Koeffizienten W eines Fahrzeugs, der die Anzahl Impulse der spezifischen Quelle des Fahrzeugs pro gegebener Entfernung darstellt, ausgedrückt in imp/km mit Präzision auch über eine kurze Entfernung zu bestimmen,

wobei die Vorrichtung eingerichtet ist, damit ein Bediener bei manueller Version die von der Impulsquelle (17) erzielten Resultate mit den von dem Winkelgeber (7) erzielten vergleichen kann.

2. Vorrichtung nach Anspruch 1, bei der die Achse (10), die senkrecht zu dem Teleskoparm (8) ist, der den Körper des Winkelgebers (7) trägt, einen Kodiersensor (18) mit doppeltem Eingang, den er steuert, trägt,

- wobei der Kodierer (18), der mit der elektro-informatischen Verwaltungsunterbaugruppe (B) verbunden ist, in Drehung von einem Multiplizierrad (22) angetrieben wird, das auf ein Pendellager (2, 3) montiert ist, und in Drehung von einer Verbindungsachse (11) angetrieben wird, die fest mit dem Teleskoparm (8) verbunden ist, der um ein Kugelgelenk (9) schwenkt, **dadurch gekennzeichnet,**
- **dass** der Teleskoparm (8) einen optischen oder magnetischen Sensor (20) aufweist, der mit der elektro-informatischen Verwaltungsunterbaugruppe (B) verbunden ist, die eingerichtet ist, um bei stehendem Fahrzeug Einschlagamplituden nach rechts und nach links zu erfassen, die durch mindestens zwei Markierungen (21 a und 21b) dargestellt sind, so dass:
- es die von dem Kodierer mit doppeltem Eingang (18) in Anzahl Impulse umgewandelten Einschlagamplituden erlauben, beim fahrenden Fahrzeug die Richtungswechsel und ihre Amplituden mittels der elektro-informatischen Verwaltungsunterbaugruppe (B) anzuzeigen, um durch eine Grafik den **Verlauf einer Strecke zu bestimmen, eine Fläche, ein Straßendeckenvolumen,** Anordnungsabstände zu berechnen.

3. Vorrichtung nach einem der Ansprüche 1 oder 2, bei der ein optischer Sensor (19), der mit der elektro-informatischen Verwaltungsunterbaugruppe (B) verbunden ist, eingerichtet ist, um vor der Ziffer der Einheiten eines Fahrpreisanzeigerzählers positioniert zu werden, **dadurch gekennzeichnet,**

- **dass** die Zustandsänderung der Leuchtsegmente des Fahrpreisanzeigers im Augenblick eines Herunterfallens, das einer Entfernung oder einer Dauer entspricht, den Start und dann das Ende des Zählens des Winkelgebers (7) mit großer Auflösung gibt und daher das Vergleichen der von dem Fahrpreisanzeigerzähler und dem Winkelgeber (7) mit großer Auflösung gespeicherten Entfernung zu erlauben, die von dem einem und dem anderen aufgezeichneten Entfernungen anzuzeigen, sie zu drucken und den Vergleich der Resultate in Prozentsätzen auszudrücken.

4. **Vorrichtung nach einem der Ansprüche 1 bis 3, bei der zwei** Unterbaugruppen (A) zum Aufnehmen von Informationen eingerichtet sind, um auf die Vorder- oder Hinterräder eines Fahrzeugs montiert und mit der elektro-informatischen Verwaltungsunterbaugruppe (B) verbunden zu werden, **dadurch gekennzeichnet,**
**dass** sie einen Positionsgeber auf dem Bremspedal und/oder eine Verbindung auf dem elektrischen Signal, das von den Heckbremsleuchten geliefert wird, aufweist,
**dass** sie eine dritte Unterbaugruppe (A") oder eine beliebige der Unterbaugruppen (A) oder (A') zum Aufnehmen von Informationen aufweist, die auf ein ungebremstes Rad (X) montiert ist, das an das Fahrzeug durch einen Schlepparm derart gekoppelt ist, dass:

die von den Kodierern (7 und 7') gemessene Geschwindigkeit des Fahrzeugs, das Starten des Bremsens und das Ende dieses Letzteren es erlauben, die Effizienz des Bremsens des rechten Rads mit der des linken Rads ausgedrückt in einem Prozentsatz zu vergleichen, den zum Stoppen des Fahrzeugs erforderlichen Bremsweg bei einer gegebenen Geschwindigkeit dank des ungebremsten Rads (X) zum Einstellen des Bremssystems zu bestimmen.

**5.** Vorrichtung nach den Ansprüchen 1 bis 4, **dadurch gekennzeichnet, dass** sie zwei Unterbaugruppen (A und A') zum Aufnehmen von Informationen aufweist:

- wobei die Unterbaugruppen (A und A') auf die Vorderräder eines Fahrzeugs montiert und mit der elektro-informatischen Verwaltungsunterbaugruppe (B) derart verbunden sind, dass:

die durch Markierungen (21 a und 21 b), die präzis in der Achse eines Rads positioniert sind, dargestellten Einschlagwinkel von einem Sensor (20) erfasst, von einem Kodierer (18) in Anzahl Impulse umgewandelt werden, mit den Einschlagwinkeln, die durch Markierungen (21a' und 21b') dargestellt sind, die präzis in der Achse des anderen Rads positioniert sind, die von einem Sensor erfasst werden, von einem Kodierer (18') in Anzahl Impulse umgewandelt werden, zum Kontrollieren der Vorderradspur verglichen werden können.

**6.** Vorrichtung nach den Ansprüchen 1 bis 5, die die Unterbaugruppen (A und A'), ein Kabel des Schwungmagnetzünders oder des Drehzahlenmessers des Fahrzeugs zu einem Verbindungsstecker (17'), einen Sensor von Positionen auf der Lenksäule, einen Sensor von Positionen (24) des Schalthebels, einen Horizontallagensensor (16) aufweist, die mit der elektro-informatischen Verwaltungsunterbaugruppe (B) derart verbunden sind,
dass eine Beziehung zwischen den Entfernungen, den Zeiten, den erreichten Geschwindigkeiten, den Drehzahlen, den verwendeten Gängen, den Bremszeiten während einer Strecke erstellt werden kann;

- dass eine Grafik erstellt werden kann, die den Verlauf der Strecke oder der Bahn darstellt,
- dass eine andere Grafik editiert werden kann, die das Profil dieser Bahn oder dieser Strecke darstellt und das Erstellen dieser Beziehung erlaubt, um die Leistungen verschiedener Fahrzeuge oder verschiedener Fahrer zu vergleichen, zum Lernen dieser Letzteren oder zur Optimierung eines Fahrzeugs beizutragen.

**7.** Vorrichtung nach einem der Ansprüche 1 bis 6, bei der die tragbare elektro-informatische Verwaltungsunterbaugruppe (B) in einem Koffer eingebaut und geschützt ist, **dadurch gekennzeichnet:**

- **dass** sie einen Mikrocontroller, einen Speicher, einen Rechner, eine Kommunikationsschnittstelle und verschiedene Anschlussgrundplatten aufweist, die das Verbinden mit den verschiedenen Kodierern und Sensoren der Unterbaugruppe (A) zum Aufnehmen von Informationen erlauben, und
- **dass die elektro**-informatische Verwaltungsunterbaugruppe (B) gemeinsam mit einer Unterbaugruppe (A) zum Aufnehmen von Informationen das Steuern eines Fahrzeugs derart erlaubt, dass die Merkmale dieses Fahrzeugs, der charakteristische Koeffizient W dieses Fahrzeugs, das Resultat der Kontrolle der Preise eines Fahrpreisanzeigerzählers, das Resultat eines Fahrtenschreibers, das Resultat einer Radspurkontrolle, der Verlauf und/oder das Profil einer Strecke, das Bestimmen einer Fläche, das Berechnen eines Straßendeckenvolumens, das Berechnen von Intervallen bestimmt werden können, um diese Resultate in Form von Texten, Zahlen und/oder Grafiken zu drucken.

EP 1 292 833 B1

FIG 1

13

FIG 2

FIG 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 0297007 E
- FR 2739927 A